# EUROPEAN PATENT APPLICATION

(11) **EP 2 657 266 A1**
(43) Date of publication of application: **30.10.2013**
(21) Application number: 12165944.5
(22) Date of filing: 27.04.2012
(51) Int. Cl.: C08G 8/00, C08G 12/00, C08L 61/00, C08L 61/12, C08L 61/14, C04B 26/00, C08K 5/00

(54) **Process for the preparation of a phenol-formaldehyde resin having a low amount of free formaldehyde, a phenol-formaldehyde resin resulting from this process, and the use of this resin as a binder for mineral wool insulation products**

(71) Applicant: URSA Insulation, S.A., 28004 Madrid (ES)
(72) Inventor: Castro-Cabado, Maria Mercedes, 28050 Madrid (ES); Sanchez Perucha, Alejandro, 28046 Madrid (ES); Aznar Écija, Ana Isabel, 43004 Tarragona (ES); Casado Dominguez, Arturo Luis, 28860 Paracuellos de Jarama Madrid (ES)
(74) Representative: HOFFMANN EITLE

(57) **Abstract**

The present invention relates to a process for reducing the content of free formaldehyde in a commercial phenolformaldehyde resin, comprising the step of treating a phenolformaldehyde resin with at least one phenol derivative or aniline derivative, wherein the pH of the resin is 7 or higher. The present invention further relates to a phenolformaldehyde resin resulting from this process. The phenolformaldehyde resin obtained by the process of the present invention may be used for the preparation of a binder composition for mineral wool products.

## Description

The present invention relates to a method of reducing the content of free formaldehyde in phenol-formaldehyde resins thereby producing a phenol-formaldehyde resin having a low amount of free formaldehyde as well as the use of the resulting resin as a binder in the manufacture of mineral wool insulation products of low formaldehyde emissions.

### State of the Art

The mineral wool products have traditionally being manufactured by welding glass fibers by means of phenol-formaldehyde resins, profiting from a relatively low cost and the good mechanical properties, stability and water resistance granted to the finished products. Most common phenol-formaldehyde resins for mineral wool production are *resols* manufactured by condensation of formaldehyde and phenol catalyzed by strong alkalis and using a large molar excess of the formaldehyde. These resins contain from about 45 to about 55 % weight solid content, and from about 2 to 8 weight % of free formaldehyde.

For a good processability, these phenol-formaldehyde resins should have a good stability, good dilutability with water, normally above 20 times measured by the method ISO 8989 method, a viscosity below 100 mPa.s to facilitate the application on the glass fibers, and a suitable curing rate, between 3-15 minutes measured by the B-time method ISO 8987 method. Preferably, the resins shall have a pH greater than 7 to avoid or minimize potential corrosion issues on carbon steel equipment.

The main drawback of the phenol-formaldehyde resins is the slow release of formaldehyde in finished products to the environment, contributing to worsen the indoor air quality; hence there is a great desire of producing phenol-formaldehyde resins with a low free FA content, helping to reduce emissions of formaldehyde from mineral wool products. Different methods to reduce free formaldehyde in phenolic resins have been described.

One group of methods refers to the use of formaldehyde scavengers which reacts with the free formaldehyde in the resin. For instance, EP 0 148 050 A1 describes the use of urea as formaldehyde scavenger by formation of formaldehyde-urea condensates. This method is useful to decrease the level of free formaldehyde in phenol-formaldehyde resins. Nevertheless the formed adducts can reversibly regenerate free formaldehyde during the curing process of the resin and/or the after curing due to the aging. Furthermore, the US 2011/111226 A1 describes the use of substances with active methylene groups as formaldehyde scavengers. These methods are also useful to the goal of reducing free formaldehyde. However, the required reaction conditions are harsh, leading to higher condensation in the resin which may then suffer from reduced stability and water dilutability.

A second set of solutions consists of the use of a compound able to form condensates with both phenol and formaldehyde.

For example, WO 2008/043961 A1 describes the use of monoethanolamine that reacts with free formaldehyde and phenol via Mannich reaction. It is described that this method decreases the free formaldehyde in the resin. However, it requires the use of relatively high temperatures, normally around 60 °C, what makes the resin condensates to acquire a high degree of condensation during the process. Consequently, the thermal stability of the resins is seriously compromised and they tend to generate precipitates over time. Further, their dilutability in water is also significantly reduced, complicating their processability in the manufacturing plants. A way to increase the stability of such high condensed resins would be to reduce their pH by means of organic acids such as sulfamic acid. However, such low pH has negative effects on carbon steel plant installations due to corrosion and requires expensive investments to upgrade installations with stainless steel materials.

Furthermore, the method described in WO 2012/25699 A1 relates to a method for reducing free formaldehyde in resins using glycine as formaldehyde scavenger. The latter overcomes the need of using the acid to achieve resin stabilization but the process still requires relatively high reaction temperatures making the process difficult to undertake in glass wool manufacturing plants.

A third group of solutions consist of the treatment of the mineral wool product with formaldehyde scavengers which reacts with the free formaldehyde being issued from the fleece. For instance, the method described in WO 2008/005635 A2 consists of the use of sodium bisulfite, sodium metabisulfite and tetraethylenepentamine as formaldehyde scavengers. Another method disclosed in WO 2011/148076 A1 consists of the use of dihydrazides as formaldehyde scavengers. These methods can decrease the measured emissions of formaldehyde from mineral wool products although the efficiency is limited. Additionally, the use of hydrazides is significantly limited due to its hazardousness, difficulty in handling and price.

### Description of the invention

It is an object of the present invention to provide a new process for reducing the content of free formaldehyde in a phenol-formaldehyde resin to an amount of lower than 0.5 weight % measured by method ISO 11402. This process has the advantage that it effectively reduces the content of free formaldehyde in the phenol-formaldehyde resin but, at the same time, does not significantly impact the stability, dilutability with water, viscosity and reactivity of the phenol-formaldehyde-resin used as starting material. Moreover, the process can be undertaken with good efficiencies at a pH in the range of 7 to 10 which is advantageous in industrial production.

In contrast to the formaldehyde reducing processes described in the art, the process of the present invention is particularly valuable in the manufacture of binders used for glass wool insulation products because:
(1) the treatment of the phenol-formaldehyde resin involves easy to handle and inexpensive chemicals, and can be undertaken at around ambient temperature at a suitable rate. Consequently, the process can be done at the own glass wool manufacturing premises without major investments, and the resulting resin can be consumed in situ avoiding long storage and transportation stability requirements for the resin; and
(2) the unwanted corrosion damage of carbon steel production equipment can be minimized due to the high pH of the resulting resin.

It is a further object of the present invention to provide a novel modified phenol-formaldehyde resin that has a low amount of free formaldehyde, is non-corrosive, shows excellent reactivity and excellent suitability for its use as a binder of mineral wool products.

According to the present invention, the process for reducing the content of free formaldehyde in a phenol-formaldehyde resin comprises the step of treating a phenol-formaldehyde resin with a phenol derivative or aniline derivative, wherein both the phenol-formaldehyde resin used as the starting material and the resulting phenol-formaldehyde resin obtained after said step of contacting the starting material with said phenol derivative or aniline derivative have the following characteristics: a pH of 7 or above, in particular 7-10, a dilutability of more than 20 times in demineralized water, a viscosity lower than 100 mPa.s at 20 °C, and a curing B-time between 3-15 minutes.

The phenol-formaldehyde resin that is used as a starting material for the process of the present invention is a *resol* produced by condensation of formaldehyde and phenol in a formaldehyde:phenol molar ratio greater than 1.1, preferably greater than 1.8 and more preferably greater than 2. Usually, the formaldehyde:phenol molar ratio in the phenol-formaldehyde used as starting material in the process of the present invention is not greater than 3. The condensation process for preparing the phenol-formaldehyde resin starting materials is usually catalyzed by NaOH, KOH or Ca(OH)₂ most preferably NaOH. The pH of the phenol-formaldehyde resin starting material is usually from 7 to 10.

According to a preferred embodiment, the phenol-formaldehyde resin used as a starting material is an aqueous solution composed of from 5 to 70 weight %, more preferable from 40 to 65 weight %, and most preferably from 45 to 55 % weight of said phenol-formaldehyde *resol* condensates.

According to an even more preferred embodiment, the phenol-formaldehyde resin used as a starting material in the present invention contains from about 5 to 8.5% weight of free formaldehyde, determined by the method ISO 11402. Such resin is characterized in that it can be diluted with more than 10 parts of demineralized water, in particular more than 20 parts, determined by the method ISO 8989. This is normally referred to as 'infinite' dilutability in water. Particular examples of preferred phenol-formaldehyde resins used as a starting material in the present invention are Bakelite PF 1230V from Momentive or Borofen B-1606A supplied by Fenolit.

The phenol derivative or aniline derivative used in the process according to the present invention is any phenol derivate or aniline derivative according to formula A, where X is selected from the list composed of OH, OR, NH₂, NHR, NRR'; Y is independently selected from the list composed of OH, OR, NH₂, NHR, NRR'; R, R' and R" are similar or different C₁₋₈H₂₋₁₆Z hydrocarbon group; Z is independently selected from the list of H, OH, OR, NH₂, NHR, NRR'; n = 0 to 4, m = 0 to 4, with the proviso that n + m is 0 to 4; and Y/R'' is/are in positions 2 to 5 relative to X, with the proviso that X is not OH or NH₂ when n=m=0.

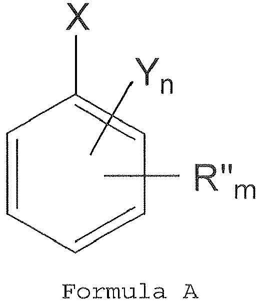

It is preferred to use a phenol derivative according to formula A, wherein X is selected from the list composed of OH and OR; Y is independently selected from the list composed of OH and OR; R, R' and R" are similar or different C₁₋₈H₂₋₁₆Z hydrocarbon groups; Z is independently selected from the list of H, OH, OR, NH₂, NHR, NRR'; n = 0 to 4, m = 0 to 4, with the proviso that n + m is 0 to 4; and Y/R'' is/are in positions 2 to 5 relative to X, with the proviso that X is not OH when n=m=0.

It is even more preferred to use a phenol derivative selected from resorcinol, hydroquinone, cresol and catechol. The most preferred phenol derivative is resorcinol due to the suitable condensation rate with formaldehyde, relative ease dosing and handling, non toxicity and affordable cost.

According to the process of the present invention, the process comprises the step of contacting the phenol-formaldehyde resin used as starting material with a solution of the phenol derivative or aniline derivative, e.g. resorcinol, in a suitable amount. The amount of phenol derivative and aniline derivative is not particularly limited. It is however preferred to use from 0.25 to 2 mol of phenol derivative or aniline derivative per mol of free formaldehyde present in the starting resin, more preferably from about 0.4 to 1 mol of phenol derivative or aniline derivative per mol of free formaldehyde present in the starting resin. This amount of phenol derivative or aniline derivative is very suitable to achieve the conversion of the free formaldehyde in the phenol-formaldehyde resin without deteriorating the dilutability of the phenol-formaldehyde resin in water.

In case of resorcinol, the inventors surprisingly found a molar ratio of resorcinol:free formaldehyde of 0.80 to be particularly suitable.

The temperature at which the process according to the present invention is to be carried out is not specifically limited. However, a temperature range of 5 to 60 °C has been found suitable. It is preferred to apply a temperature in the range of 15 to 45 °C, and most preferably from 20 to 30 °C. At a temperature range of 15 to 45 °C, and in particular a temperature range of 20 to 30 °C, the reaction of the phenol derivative or aniline derivative as defined above with free formaldehyde contained in the phenol-formaldehyde resin used as starting material occurs at reasonable rate without deteriorating the dilutability in water of the resin.

Furthermore, the contact period is not particularly limited in the process of the present invention. However, a suitable time of contacting the phenol-formaldehyde resin with the phenol derivative or aniline derivative is 1 to 180 minutes, more preferable 10 and 120 minutes, and most preferably 30 to 100 minutes.

The phenol-formaldehyde resin that is obtained by the process according to the present invention is a modified phenol-formaldehyde resin. "Modified" means that it is a phenol-formaldehyde resin wherein the phenol derivative or aniline derivative is incorporated into the resin thereby resulting in a phenol-formaldehyde resin that is modified with the phenol derivative or aniline derivative. This means, the resulting resin is essentially composed of condensates produced upon condensation of phenol and formaldehyde, condensates produced upon condensation of phenol derivative or aniline derivative according to formula A and formaldehyde, and condensates produced upon condensation of phenol, formaldehyde and the phenol derivative or aniline derivative according to formula A. The modified phenol-formaldehyde resin resulting from the process of the present invention has a content of free formaldehyde of below 0.5 weight %, as measured according to the ISO 11402 method. Furthermore, the phenol-formaldehyde resin obtained by the process according to the present invention has an excellent dilutability in water, measured by ISO 8989 method, of more than 20 times in demineralized water at 20 °C. The resulting modified phenol-formaldehyde resin has a low viscosity, in particular below 100 mPa.s at 20 °C (e.g. measured with a Brookfield viscometer, spindle 1, 60 rpm), an excellent curing behavior in terms of B-time, as determined by the ISO 8987 method. More particularly, the B-time of the resulting resin is in the range of 3 to 15 minutes which is in the same range compared to the untreated phenol-formaldehyde resin, i.e. the phenol-formaldehyde resin used as starting material. Finally, the resulting phenol-formaldehyde resin shows negligible impact on corrosion of carbon steel equipment down the manufacturing line due to its pH of 7 or higher, in particular its pH in the range of 7-10.

In a further embodiment of the present invention the process as defined above may contain an additional step of treating the phenol-formaldehyde resin with an oxidizing agent such as hydrogen peroxide, ammonium persulfate, sodium percarbonate, sodium perborate, peracetic acid or performic acid. Such an oxidizing agent has the effect of reducing free formaldehyde from the resin. The treatment using an oxidizing agent may be carried out before or after the step of treating the resin with the phenol derivative or aniline derivative as described above.

The phenol-formaldehyde resin as obtained by the process according to the present invention described above is to be used for the preparation of a binder composition for fibrous substrates, particularly mineral wool fibers. Such a binder composition for mineral wool fibers comprises the phenol-formaldehyde resin as obtained by the process according to the present invention and at least one additive such as, but not limited to, urea, latent acid catalysts such as ammonium sulfate, sodium bisulfite, hydrophobizing agent such as silicones, de-dusting agent such as paraffin oils, adhesion promoter agent such as silanes, fiber softener, dyes and corrosion inhibitors. It is preferred that said composition additionally comprises of at least one chain extender such as, but not limited to, sugars, molasses, starches and modified starches, lignosulfonates or tannins.

The resulting mineral wool fiber products show a formaldehyde emission below 20 µg/m³ (method ISO 16000-3), more preferable lower than 15 µg/m³ and most preferable lower than 10 µg/m³.

The mineral wool product may comprise at least additional facing made of paper, aluminum, glass veil or mixtures thereof. The mineral wool obtained may be used for thermal or acoustic insulation purposes in buildings, conducts, particularly air-conditioning conducts, electrical appliances, ships, aircrafts and spaceships.

### Example

A 1-L round bottom flask equipped with a mechanical stirred and a thermostatic bath, was charged with 150 grams of phenol-formaldehyde resin Borofen B-1606A supplied by Fenolit, of 47 weight % solids. The content of free formaldehyde of this resin measured with the method ISO 11402 was 6.9 weight % (0.348 mol). 30 grams (0.28 mol) of solid resorcinol previously dissolved in 45 mL of water. The mixture is stirred at 25 °C for 60 minutes obtaining a reddish solution of resin A. The main properties of the produced resin are in the Table 1.

**Table 1: Properties of phenol-formaldehyde resins with reduced content of free formaldehyde**

| | Untreated Resin | Resin A |
|---|---|---|
| Free formaldehyde (% weight) ⁽¹⁾ | 6,9 (ref) | 0,48 |
| Dilutability in water (parts) ⁽²⁾ | >20 | >20 |
| pH | 8.9 | 7.8 |
| Corrosion carbon steel (mm/year) | < 0.1 | < 0.1 |
| Viscosity (mPa.s) ⁽³⁾ | 30 | 45 |
| B-time (min) ⁽⁴⁾ | 7.5 | 7.3 |
| Modulus of impregnated glass paper (N.m) ⁽⁵⁾ | 628 | 746 |
| Modulus of impregnated glass paper after aging (N.m) ⁽⁶⁾ | 524 | 658 |

| | | |
|---|---|---|
| (1) ISO 11402 (2) ISO 8989 (3) measured at 20 °C using a Brookfield viscometer, spindle 1, 60 rpm (4) ISO 8987 (5) Load 20% solids, cured 3 min at 170 °C (6) Method in (5) followed by immersion in water for 10 min at 85 °C. | | |

As it may be taken from the above table, in the particular case of resorcinol, the inventors have surprisingly found that the mechanical properties, particularly elongation modulus, granted to impregnated glass fibers with the new modified phenol-formaldehyde resin that is obtained by the process according to the present invention are better than in the untreated phenol-formaldehyde resin.

## Claims

1. A process for reducing the content of free formaldehyde in a phenol-formaldehyde resin, comprising the step of contacting a phenol-formaldehyde resin used as the phenol-formaldehyde resin starting material with at least one phenol derivative or aniline derivative of the formula A, 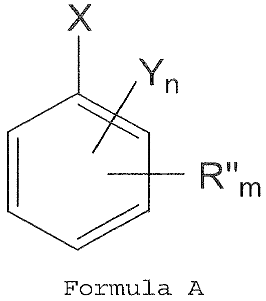 wherein X is selected from the list composed of OH, OR, NH₂, NHR, NRR'; Y is independently selected from the list composed of OH, OR, NH₂, NHR, NRR'; R, R' and R'' are similar or different C₁₋₈H₂₋₁₆Z hydrocarbon groups; Z is independently selected from the list of H, OH, OR, NH₂, NHR, NRR'; n = 0 to 4, m = 0 to 4, with the proviso that n + m is 0 to 4; and Y/R'' is/are in positions 2 to 5 relative to X, with the proviso that X is not OH or NH₂ when n=m=0, wherein
both the phenol-formaldehyde resin used as the starting material and the resulting phenol-formaldehyde resin obtained after said step of contacting the starting material with said phenol derivative or aniline derivative have the following characteristics: a pH of 7 or higher, viscosity below 100 mPa.s at 20 °C, and a dilutability of more than 20 times in demineralized water.

2. The process according to claim 1 wherein X is selected from the list composed of OH and OR; Y is independently selected from the list composed of OH and OR; R, R' and R" are similar or different C₁₋₈H₂₋₁₆Z hydrocarbon groups; Z is independently selected from the list of H, OH, OR, NH₂, NHR, NRR'; n = 0 to 4, m = 0 to 4, with the proviso that n + m is 0 to 4; and Y/R'' is/are in positions 2 to 5 relative to X, with the proviso that X is not OH when n=m=0.

3. The process according to claim 1 or 2 wherein the phenol derivative is one or more selected from phenol, resorcinol, hydroquinone, cresol or catechol.

4. The process according to any one of claims 1-3 wherein the step of contacting said phenol-formaldehyde resin with said phenol derivative or aniline derivative is carried out a temperature of 15 to 45 °C.

5. The process according to claim 4 wherein the step of contacting said phenol-formaldehyde resin with said phenol derivative or aniline derivative is carried out a temperature of 20 to 30 °C.

6. The process according to any one of the previous claims wherein the time of the step of contacting said phenol-formaldehyde resin with said phenol derivative or aniline derivative is 1 to 180 minutes.

7. The process according to any one of the previous claims wherein the amount of phenol derivative or aniline derivative is from about 0.25 to 2 mol of phenol derivative or aniline derivative per mol of free formaldehyde present in the starting phenol-formaldehyde resin.

8. The process according to any one of the previous claims wherein the process contains an additional step of treating the phenol-formaldehyde resin with an oxidizing agent such as hydrogen peroxide, ammonium persulfate, sodium percarbonate, sodium perborate, peracetic acid or performic acid.

9. A phenol-formaldehyde resin modified by a phenol derivative or aniline derivative according to formula A, **characterized in that**:
- the free formaldehyde content is below 0.5 weight % determined by ISO 11402;
- the pH is in the range of 7 to 10;
- the dilutability is more than 20 times in demineralized water at 20 °C;
- the viscosity is below 100 mPa.s at 20 °C.

10. Use of the phenol-formaldehyde resin according to claim 9 for the preparation of a binder composition for mineral wool products.

11. A mineral wool product produced with the phenol-formaldehyde resin according to claim 9.

12. The use of mineral wool product of claim 11 for thermal or acoustic insulation purposes in buildings, conducts, electrical appliances, ships, aircrafts and spaceships.
